# EUROPÄISCHE PATENTANMELDUNG

(11) **EP 0 917 985 A2**
(43) Veröffentlichungstag der Anmeldung: **26.05.1999**
(21) Anmeldenummer: 98121894.4
(22) Anmeldetag: 18.11.1998
(51) Int. Cl.: B60Q 1/26

(54) **Warnlichtanlage für Kraftfahrzeugdächer**

(30) Priorität: 21.11.1997 DE 19751757
(71) Anmelder: Hella KG Hueck & Co., 59552 Lippstadt (DE)
(72) Erfinder: Beck, Christian, 91054 Erlangen (DE); Schreckenberg, Franz-Josef, 33178 Borchen (DE)

(57) **Zusammenfassung**

Die Warnlichtanlage weist ein aus mehreren Teilen zusammengesetztes langgestrecktes Gehäuse (1,2,3) auf. Ein langgestrecktes Trägerelement (4) für Lichtsysteme verläuft im Inneren des Gehäuses (1,2,3). Das Gehäuse (1,2,3) ist von einem gerippeartigen Gestell (4,8,9) getragen, wobei das Trägerelement (4) ein im Inneren des Gehäuses (1,2,3) verlaufendes Bauteil des gerippeartigen Gestells (4,8,9) ist und das gerippeartige Gestell (4,8,9) einen am Kraftfahrzeugdach (10) befestigbaren Halter (7) aufweist.

## Beschreibung

Die Erfindung bezieht sich auf eine Warnlichtanlage für Kraftfahrzeugdächer mit einem aus mehreren Teilen zusammengesetzten langgestreckten Gehäuse, mit einem langgestreckten Trägerelement, an dem im Inneren des Gehäuses angeordnete Lichtsysteme befestigt sind, und mit mindestens einem am Kraftfahrzeugdach befestigbaren Halter.

Eine solche Warnlichtanlage für Kraftfahrzeugdächer ist aus der EP 0 566 361 A2 bekannt. Die untere Außenseite des Gehäuses ist von dem langgestreckten Trägerelement und die obere Außenseite des Gehäuses von lichtdurchlässigen Abschlußteilen gebildet. Das Trägerelement ist kostenintensiv in seiner Herstellung, da es aus einer Aluminiumschiene besteht. Die lichtdurchlässigen Abschlußteile sind aus einem anderen Material, wie z. B. Kunststoff, hergestellt und sind mittels Schrauben an dem aus Aluminium bestehenden schienenartigen Trägerelement befestigt. Wegen der großen unterschiedlichen Wärmeausdehnung von Aluminium und Kunststoff ist die sichere Befestigung von großflächigen, lichtdurchlässigen Abschlußteilen an dem Trägerelement und ein dichtes Verbinden von Trägerelement und Abschlußteil problematisch. Zwischen den lichtdurchlässigen Abschlußteilen sind Trennwände angeordnet. Das schienenartige Trägerelement muß sehr stabil ausgeführt sein, da es auf seiner Außenseite den am Kraftfahrzeugdach befestigbaren Halter aufweist und sowohl die Lichtsysteme als auch die lichtdurchlässigen Abschlußteile trägt. Außerdem muß das schienenartige Trägerelement an seiner Außenseite korrosionsbeständig und dicht ausgeführt sein. Ferner bestimmt das Trägerelement einen Teilbereich der Gehäuseform mit.

Aufgabe der Erfindung ist es, die im Oberbegriff des Anspruchs 1 beschriebene Warnlichtanlage für Kraftfahrzeugdächer derart zu gestalten, daß das Trägerelement der Lichtsysteme auch dann stabil mit dem Fahrzeug verbindbar ist, wenn sämtliche die Außenseite des Gehäuses bildenden Teile eine dünne Wandstärke aufweisen können und zu einer notwendigen Versteifung des dünnwandigen Gehäuses möglichst wenig Bauteile notwendig sind und das Trägerelement geschützt gegen Schmutz und Spritzwasser angeordnet ist. Diese Aufgabe wird nach der Erfindung dadurch gelöst, daß das Gehäuse von einem gerippeartigen Gestell getragen ist, welches den am Kraftfahrzeugdach befestigbaren Halter aufweist, wobei das Trägerelement der Lichtsysteme ein im Inneren des Gehäuses verlaufendes Bauteil des gerippeartigen Gestells ist. Dadurch ist das Gehäuse umlaufend in seinem Design frei, und die Teile des Gehäuses sind aus einem beliebigen Werkstoff herstellbar. Sämtliche die Außenseite des Gehäuses bildenden Teile können aus lichtdurchlässigem Werkstoff, hier zum Beispiel Kunststoff, hergestellt sein. Somit muß die untere Seite des Gehäuses nicht nahe dem Fahrzeugdach verlaufen bzw. der Form des Fahrzeugdaches angepaßt sein. Die untere Seite des Gehäuses kann vielmehr so geformt und, bedingt durch die Halter, soweit vom Kraftfahrzeugdach beabstandet sein, daß ihre Unterseite gut zu sehen ist. Das Gehäuse weist eine hohe Steifigkeit auf und ist einfach aufgebaut, wenn das gerippeartige Gestell rahmenartige Bauteile aufweist, welche mindestens einen zwischen ihnen verlaufenden Teil des Gehäuses haltern und durch das im Inneren des Gehäuses verlaufende langgestreckte Trägerelement verbunden sind. In diesem Zusammenhang ist es weiterhin vorteilhaft, wenn an die Innenseite mindestens eines rahmenartigen Bauteils eine zwei benachbarte Kammern des Gehäuses begrenzende Trennwand angeformt ist. Dadurch entfallen zusätzliche Teile.

Bei einer besonders vorteilhaften Weiterbildung der Erfindung ist ein zwischen den rahmenartigen Bauteilen verlaufendes erstes Teil des Gehäuses rinnenartig ausgeführt und ein zweiter Teil des Gehäuses ein abnehmbarer Deckel, welcher die vordere Öffnung des rinnenartigen Teils des Gehäuses abdeckt. Der erste und zweite Teil des Gehäuses sind aus Kunststoffplatten herstellbar, welche unter Wärme in ihre Form drückbar sind. Dadurch sind das erste und zweite Teil des Gehäuses kostengünstig herstellbar.

Das gerippeartige Gestell ist durch Profilleisten versteifbar, welche die rahmenartigen Bauteile an ihren äußeren Seiten verbinden. Dabei ist es vorteilhaft, wenn an zwei sich benachbarten Profilleisten die vorderen Ränder des rinnenartigen Teils des Gehäuses und der als Deckel dienende Teil des Gehäuses befestigt sind. Der Deckel kann die gesamte vordere Öffnung des rinnenartigen Teils abdecken und mit seinen seitlichen Rändern an den rahmenartigen Bauteilen befestigt sein. Das Gehäuse weist einen guten CW-Wert auf, wenn der Scheitelbereich des rinnenartigen Teils in Fahrtrichtung des Fahrzeuges weist. Der als Deckel dienende Teil des Gehäuses ist dann zur Fahrzeugrückseite hin gerichtet. Dadurch ist der Deckel, und somit das Innere des Gehäuses, auch am Fahrzeugdach leicht zugänglich. An dem Trägerelement können außer Lichtsystemen auch andere Systeme, wie zum Beispiel akustische Systeme, befestigt werden. In diesem Zusammenhang ist es weiterhin vorteilhaft, wenn der Deckel mit mindestens einer von einem Lichtsystem ausleuchtbaren Bezeichnung versehen ist. Der Deckel kann gegen einen Deckel mit einer anderen Bezeichnung oder einen Deckel ohne Bezeichnung ausgetauscht werden.

Das Gehäuse weist bei unterschiedlichen Wärmeausdehnungen von Trägerelement und Teilen des Gehäuses keine inneren Verspannungen auf, wenn das langgestreckte Trägerelement mit seinen freien Endabschnitten mit einem Befestigungsmittel verbunden ist, welches mit dem inneren Rand des rahmenartigen Bauteils verbunden ist, wobei mindestens ein Befestigungsmittel in Längsausdehnung des Trägerelementes beweglich an dem rahmenartigen Bauteil angeordnet ist. In diesem Zusammenhang ist es vorteilhaft, wenn die Trennwand des rahmenartigen Bauteils eine freistehende federnde Lasche aufweist, die am freien Ende das Befestigungsmittel für das Trägerelement trägt, wobei das Trägerelement durch eine Öffnung der Trennwand hindurchführt und angrenzend zur unteren Innenseite des rahmenartigen Bauteils verläuft. Dadurch ist kein zusätzliches Befestigungsmittel für das Trägerelement notwendig, und der Raum für die Lichtsysteme oberhalb der Trennwand ist so groß wie möglich.

Bei einer Warnlichtanlage, welche an den beiden Endabschnitten ihres langgestreckten Gehäuses ein Lichtblitzsystem aufweist, ist es vorteilhaft, wenn das langgestreckte Trägerelement mit seinen freien Endabschnitten aus zwei rahmenartigen Bauteilen herausragt, wobei die Endabschnitte freistehend in einer Lichthaube des Gehäuses angeordnet sind, welche mit ihrem äußeren umlaufenden Rand an dem benachbarten rahmenartigen Bauteil abnehmbar befestigt ist. Die Lichthauben sind, wie die anderen Teile des Gehäuses, in ihrem Design frei.

Die Lichthauben und der rinnenartige Gehäuseteil sind leicht montierbar, wenn sie mit einem Rand in eine Nut der rahmenartigen Bauteile eingesteckt sind. Hierbei ist es weiterhin vorteilhaft, wenn sämtliche Teile des Gehäuses an dem gerippeartigen Gestell durch selbstschneidende Schrauben befestigt sind.

Ein Ausführungsbeispiel nach der Erfindung ist in der Zeichnung dargestellt, und zwar zeigen:

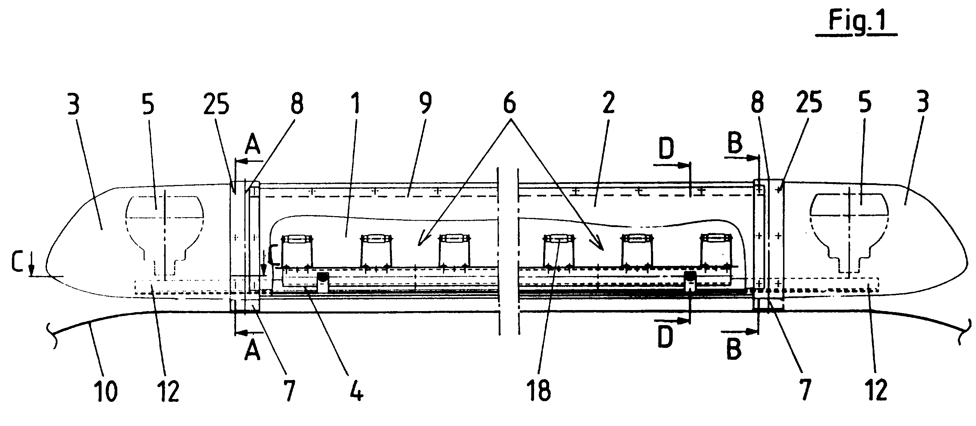

Figur 1 in einer Rückansicht eine Warnlichtanlage für Kraftfahrzeuge, deren Gehäuse von einem an ein Fahrzeugdach befestigbares Gestell getragen ist;

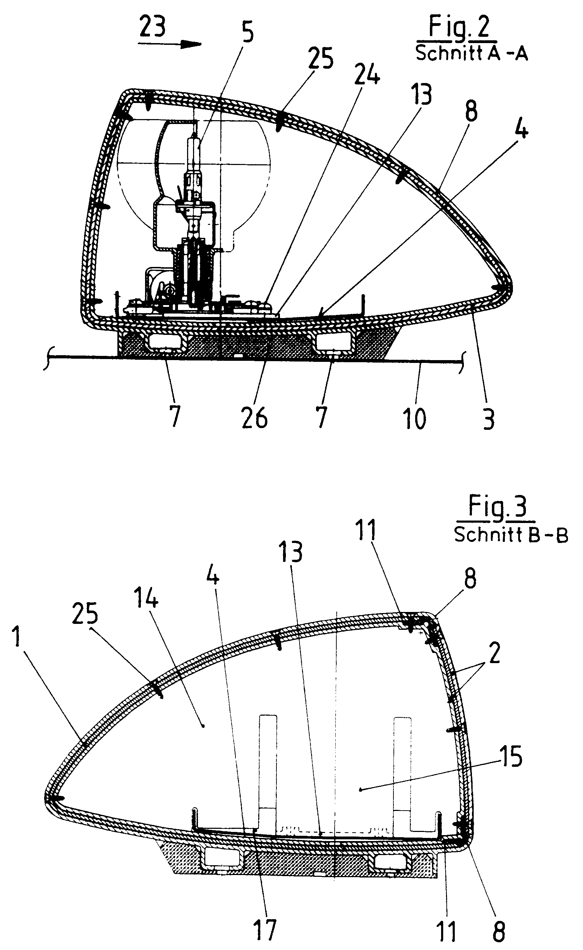

Figur 2 einen Schnitt nach der Linie A-A in Figur 1 mit einem Lichtsystem;
Figur 3 einen Schnitt nach der Linie B-B in Figur 1 mit einer das Innere des Gehäuses in Kammern aufteilenden Trennwand;

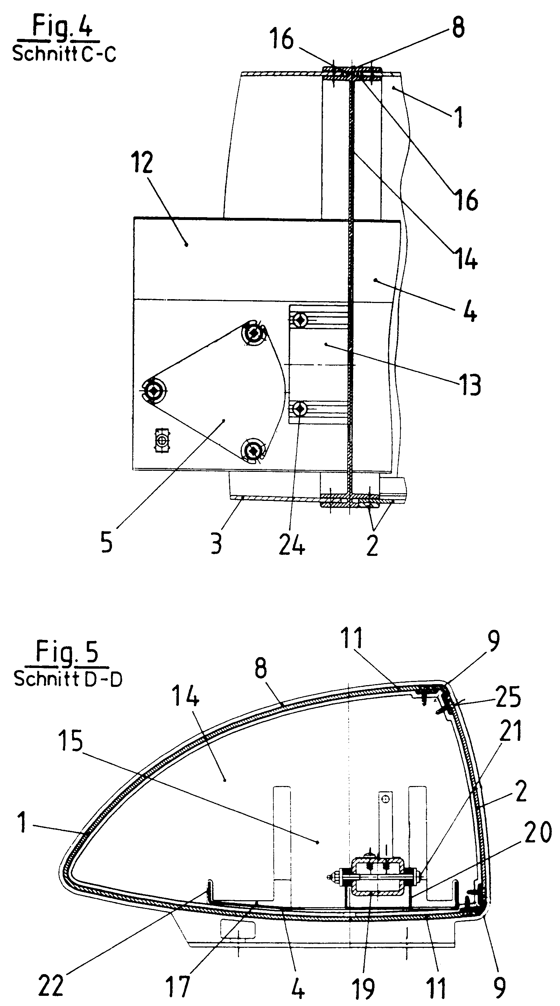

Figur 4 einen Schnitt nach der Linie C-C in Figur 1 mit einem im Inneren des Gehäuses verlaufenden Trägerelement, welches durch eine Öffnung der Trennwand hindurchführt und an dieser befestigt ist und
Figur 5 einen Schnitt nach der Linie D-D in Figur 1 mit einem weiteren Lichtsystem.

Die Warnlichtanlage für Kraftfahrzeugdächer weist ein langgestrecktes Trägerelement (4) für zwei Lichtsysteme (5) und ein Lichtsystem (6) auf. Das Trägerelement (4) ist eine Blechschiene, welche an ihren freien Endabschnitten (12) die Lichtsysteme (5) trägt. Die Lichtsysteme (5) erzeugen ein Warnblinklicht. Das zwischen den beiden Lichtsystemen (5) angeordnete Lichtsystem (6) weist mehrere nebeneinander angeordnete Lichtquellen (18) auf, durch welche eine nicht dargestellte Bezeichnung beleuchtbar ist. Die Lichtquellen (18) sind an zwei rohrförmigen Trägern (19) angebracht, welche zwischen nach oben abgewinkelten Randabschnitten (22) des Trägerelementes (4) angeordnet sind. Die rohrförmigen Träger (19) sind durch Befestigungsschrauben (21), welche durch die beiden Fahnen (20) des Trägerelementes (4) und den rohrförmigen Träger (19) hindurchgehen, an dem langgestreckten Trägerelement (4) befestigt. Das aus Blech bestehende Trägerelement (4) weist an seinen langen Seiten nach oben abgewinkelte Randabschnitte (22) auf. An dem Trägerelement (4) sind außer den Lichtsystemen (5 und 6) andere Warnsysteme, wie zum Beispiel akustische Systeme, befestigbar. Zwischen dem Lichtsystem (4) und den beiden äußeren Lichtsystemen (5) verläuft jeweils eine vertikale Trennwand (14), welche ein Gehäuse (1, 2, 3) in drei Kammern aufteilt. Zwei Kammern sind von lichtdurchlässigen Lichthauben (3) des Gehäuses gebildet, in welche die die Lichtsysteme (5) tragenden Endabschnitte (12) des Trägerelementes (4) freistehend hineinragen. Zwischen den beiden Lichthauben (3) des Gehäuses verläuft ein rinnenartiger Teil (1) und ein plattenartiger Deckel (2) des Gehäuses. Der rinnenartige Teil (1) des Gehäuses weist mit seinem Scheitelbereich in Fahrtrichtung (23) des Fahrzeugs. Somit verläuft die eine Seite des rinnenartigen Teils (1) des Gehäuses unterhalb des langgestreckten Trägerelementes (4) und die andere Seite oberhalb des Lichtsystems (6). Die offene vordere Seite des rinnenartigen Teils (1) des Gehäuses ist zur Fahrzeugrückseite hin gerichtet und durch den abnehmbaren plattenartigen Deckel (2) verschlossen. Der rinnenartige Teil (1) und der etwas gewölbte plattenartige Deckel (2) des Gehäuses bestehen aus lichtdurchlässigen Kunststoffplatten, welche unter Wärme in ihre Form gedrückt sind. Die beiden Lichthauben (3) des Gehäuses sind im Spritzgießverfahren aus Kunststoff hergestellt. Das langgestreckte Trägerelement (4) verläuft nahe der unteren Seite des rinnenartigen Teils (1) des Gehäuses und führt mit seinen freien Endabschnitten (12) durch ein rahmenartiges Bauteil (8) hindurch. Die zwischen den Lichtsystemen (5 und 6) verlaufenden vertikalen Trennwände (14) sind an die Innenseite der rahmenartigen Bauteile (8) angeformt. Das langgestreckte Trägerelement (4) liegt an der unteren Seite der beiden rahmenartigen Bauteile (8) an und geht mit seinen freien Endabschnitten (12) durch eine Öffnung (17) der Trennwand (14) hindurch. Die Trennwand (14) der beiden rahmenartigen Bauteile (8) weist eine nach unten gerichtete Lasche (15) auf, die an ihrem freien Ende mit einem in die Lichthaube (3) ragenden Befestigungsmittel (13) für das Trägerelement (4) versehen ist. Das Trägerelement (4) ist mittels Schrauben (24) mit den Befestigungsmitteln (13) des rahmenartigen Bauteils (8) verbunden. Die Laschen (15) der Trennwände (14) sind in Längsausdehnung des langgestreckten Trägerelementes (4) federnd ausgeführt. Die beiden Lichthauben (3) des Gehäuses und der rinnenartige Teil (1) des Gehäuses sind mit den sich zugewandten Rändern in Nuten (16) der rahmenartigen Bauteile (8) eingesteckt. Die beiden Lichthauben (3) und das rinnenartige Teil (1) des Gehäuses sind durch selbstschneidende Schrauben (25) lösbar mit den rahmenartigen Bauteilen (8) lösbar verbunden. Die selbstschneidenden Schrauben (25) gehen durch die Seitenwände der Nuten (16) und durch die äußeren Ränder der Lichthauben (3) und des rinnenartigen Teils (1) des Gehäuses hindurch. Der Kopf der Schrauben (25) ist in der äußeren Seitenwand der Nut (16) der rahmenartigen Bauteile (8) versenkt angeordnet. Die vorderen Ränder (11) des rinnenartigen Teils (1) des Gehäuses und die an die Ränder (11) angrenzenden Ränder des Deckels (2) des Gehäuses sind an Profilleisten (9) mittels selbstschneidender Schrauben (25) lösbar befestigt. Die Profilleisten (9) sind durch selbstschneidende Schrauben (25) an den rahmenartigen Bauteilen (8) befestigt. Die rahmenartigen Bauteile (8) weisen außen an ihrer unteren Seite angeformte Halter (7) auf, welche mittels Befestigungsbolzen (nicht dargestellt) an einem Kraftfahrzeugdach (10) festsetzbar sind. Die Halter (7) sind innerhalb eines aus gummiartigem Material bestehenden Formteils (26) angeordnet, welches unmittelbar an dem Fahrzeugdach (10) anliegt. Die beiden rahmenartigen Bauteile (8), die beiden Profilleisten (9) und das Trägerelement (4) bilden ein gerippeartiges Gestell, welches die beiden Lichthauben (3), den rinnenartigen Teil (1) und den Deckel (2) des Gehäuses trägt.

### Bezugszeichenliste

### Warnlichtanlage für Kraftfahrzeugdächer

- 1: rinnenartiger Teil des Gehäuses
- 2: Deckel des Gehäuses
- 3: Lichthaube des Gehäuses
- 4: Trägerelement
- 5: Lichtsystem
- 6: Lichtsystem
- 7: Halter
- 8: rahmenartiges Bauteil des gerippeartigen Gestells
- 9: Profilleiste des gerippeartigen Gestells
- 10: Kraftfahrzeugdach
- 11: Ränder
- 12: Endabschnitte
- 13: Befestigungsmittel
- 14: Trennwand
- 15: Lasche
- 16: Nut
- 17: Öffnung
- 18: Lichtquellen
- 19: Träger
- 20: Fahne
- 21: Befestigungsschrauben
- 22: Randabschnitte
- 23: Fahrtrichtung
- 24: Schrauben
- 25: Schrauben
- 26: Formteil

## Patentansprüche

1. Warnlichtanlage für Kraftfahrzeugdächer mit einem aus mehreren Teilen zusammengesetzten langgestreckten Gehäuse (1, 2, 3), mit einem langgestreckten Trägerelement (4), an dem im Inneren des Gehäuses (1, 2, 3) angeordnete Lichtsysteme (5, 6) befestigt sind, und mit mindestens einem am Kraftfahrzeugdach (10) befestigbaren Halter (7), dadurch gekennzeichnet, daß das Gehäuse (1, 2, 3) von einem gerippeartigen Gestell (4, 8, 9) getragen ist, welches den am Kraftfahrzeugdach (10) befestigbaren Halter (7) aufweist, wobei das Trägerelement (4) der Lichtsysteme (5, 6) ein im Inneren des Gehäuses (1, 2, 3) verlaufendes Baute des gerippeartigen Gestells (4, 8, 9) ist.

2. Warnlichtanlage nach Anspruch 1, dadurch gekennzeichnet, daß das gerippeartige Gestell (4, 8, 9) rahmenartige Bauteile (8) aufweist, welche mindestens einen zwischen ihnen verlaufenden Teil (1 und 2) des Gehäuses (1, 2, 3) haltern und durch das im Inneren des Gehäuses (1, 2, 3) verlaufende langgestreckte Trägerelement (4) verbunden sind.

3. Warnlichtanlage nach Anspruch 2, dadurch gekennzeichnet, daß rahmenartige Bauteile (8) an ihrer Außenseite den Halter (7) aufweisen.

4. Warnlichtanlage nach Anspruch 2 oder 3, dadurch gekennzeichnet, daß an die Innenseite mindestens eines rahmenartigen Bauteils (8) eine zwei benachbarte Kammern des Gehäuses (1, 2, 3) begrenzende Trennwand (14) angeformt ist.

5. Warnlichtanlage nach einem der Ansprüche 2 bis 4, dadurch gekennzeichnet, daß ein zwischen den rahmenartigen Bauteilen (8) verlaufendes erstes Teil (1) des Gehäuses (1, 2, 3) rinnenartig ausgeführt und ein zweiter Teil (2) des Gehäuses (1, 2, 3) ein abnehmbarer Deckel ist, welcher die vordere Öffnung des rinnenartigen Teils (1) des Gehäuses (1, 2, 3) abdeckt.

6. Warnlichtanlage nach einem der Ansprüche 2 bis 5, dadurch gekennzeichnet, daß das gerippeartige Gestell (4, 8, 9) mehrere Profilleisten (9) aufweist, welche die rahmenartigen Bauteile (8) an ihren äußeren Seiten verbinden.

7. Warnlichtanlage nach Anspruch 6, dadurch gekennzeichnet, daß an zwei sich benachbarten Profilleisten (9) die vorderen Ränder (11) des rinnenartigen Teils (1) des Gehäuses (1, 2, 3) und der als Deckel dienende Teil (2) des Gehäuses (1, 2, 3) befestigt sind.

8. Warnlichtanlage nach einem der Ansprüche 2 bis 7, dadurch gekennzeichnet, daß das langgestreckte Trägerelement (4) mit seinen freien Endabschnitten (12) mit einem Befestigungsmittel (13) verbunden ist, welches mit dem inneren Rand des rahmenartigen Bauteils (8) verbunden ist, wobei mindestens ein Befestigungsmittel (13) in Längsausdehnung des Trägerelementes (4) beweglich an dem rahmenartigen Bauteil (8) angeordnet ist.

9. Warnlichtanlage nach Anspruch 4 und 8, dadurch gekennzeichnet, daß die Trennwand (14) mindestens eines rahmenartigen Bauteils (8) eine freistehende federnde Lasche (15) bildet, die am freien Ende das Befestigungsmittel (13) für das Trägerelement (4) aufweist, wobei das Trägerelement (4) durch eine Öffnung (17) der Trennwand (14) hindurchführt und angrenzend zur unteren Innenseite des rahmenartigen Bauteils (8) verläuft.

10. Warnlichtanlage nach einem der Ansprüche 2 bis 9, dadurch gekennzeichnet, daß das langgestreckte Trägerelement (4) mit seinen freien Endabschnitten (12) aus zwei rahmenartigen Bauteilen (8) herausragt, wobei die freien Endabschnitte (12) freistehend in einer Lichthaube (3) des Gehäuses (1, 2, 3) angeordnet sind, welche mit ihrem äußeren umlaufenden Rand an dem benachbarten rahmenartigen Bauteil (8) abnehmbar befestigt ist.

11. Warnlichtanlage nach einem der Ansprüche 1 bis 10, dadurch gekennzeichnet, daß Teile des Gehäuses (1 und 3) mit einem Rand in eine Nut (16) des rahmenartigen Bauteils (8) eingesteckt sind.
